# EUROPÄISCHE PATENTANMELDUNG

(11) **EP 3 246 737 A1**
(43) Veröffentlichungstag der Anmeldung: **22.11.2017**
(21) Anmeldenummer: 17000855.1
(22) Anmeldetag: 18.05.2017
(51) Int. Cl.: G02B 6/38

(54) **KOPPLUNGSTEIL FÜR LICHTWELLENLEITER, SOWIE DAZUGEHÖRIGES KOPPLUNGSVERFAHREN**

(30) Priorität: 16.05.2016 DE 102016006141
(71) Anmelder: Dätwyler Cabling Solutions AG, 6460 Altdorf (CH)
(72) Erfinder: Arnold, Martin, 5630 Muri (CH)
(74) Vertreter: Samson & Partner Patentanwälte mbB

(57) **Zusammenfassung**

Die Erfindung betrifft ein Kopplungsteil für Lichtwellenleiter (2,3) mit einem Gehäuse (9). Das Gehäuse (9) weist einen ersten Aufnahmebereich (4) für ein konfektioniertes erstes Ende (5) eines ersten Lichtwellenleiters (2) auf. Das erste Ende (5) ist mit einer Schutzvorrichtung (11), die einen schützenden geschlossenen und einen lichtkoppelnden offenen Zustand (13 bzw. 14) aufweisen kann, versehen. Das Gehäuse (9) weist einen zweiten Aufnahmebereich (6) für ein konfektioniertes zweites Ende (7) eines zweiten Lichtwellenleiters (3) auf. Das zweite Ende (7) ist mit einer Schutzvorrichtung (12), die einen schützenden geschlossenen und einen lichtkoppelnden offenen Zustand (13' bzw. 14') aufweisen kann, versehen. Das Gehäuse (9) weist weiterhin einen zentralen Kopplungsbereich (8) zwischen den Aufnahmebereichen (4, 6) auf, der zum Öffnen der Schutzvorrichtungen (11, 12) an den Enden (5, 7) der Lichtwellenleiter nach deren Einführen in das Gehäuse (9) ausgelegt ist.

Der zentrale Kopplungsbereich (8) weist eine Kopplungsvorrichtung (10) zum Koppeln der konfektionierten Enden (5, 7) auf, die derart ausgestaltet ist, dass nach Einführen eines konfektionierten Endes (5, 7) eines Lichtwellenleiters (2, 3) in einen Aufnahmebereich (4, 6) des Gehäuses (9) der Beginn des Öffnens der Schutzvorrichtungen (11,12) erst dann eingeleitet wird, wenn der Beginn der Einführungsphase des jeweils anderen konfektionierten Endes (7, 5) des anderen Lichtwellenleiters (3, 2) in den jeweils anderen Aufnahmebereich (6, 4) des Gehäuses (9) abgeschlossen ist.

## Beschreibung

Die Erfindung betrifft ein Kopplungsteil für Lichtwellenleiter nach dem Oberbegriff des Anspruchs 1. Ein derartiges Kopplungsteil ist aus der EP 0 570 652 A2 bekannt. Zudem betrifft die Erfindung ein Kopplungsverfahren zum optischen Koppeln von Lichtwellenleitern in einem Kopplungsteil nach Anspruch 17.

Ein Kopplungsteil für Lichtwellenleiter mit einem Gehäuse ist zudem aus der Druckschrift EP 1 004 911 A1 bekannt. Sowohl der erste Aufnahmebereich als auch der zweite Aufnahmebereich des Kopplungsteils weisen Schutzklappen auf, die beim Einstecken von konfektionierten Enden der beiden zu koppelnden Lichtwellenleiter geöffnet werden, ohne dass Schutzvorrichtungen (welche direkt die LichtwellenleiterEnden vor Verschmutzung schützen), zum unmittelbaren Abdecken an den Enden der Lichtwellenleiter in einen lichtkoppelnden Zustand überführt werden und somit von einer geschlossenen schützenden Position in eine offene Position geschwenkt werden. Dieses geschieht erst, wenn jeweils eins der konfektionierten Enden der Lichtwellenleiter kurz vor einem Einführen in eine in dem Kopplungsteil fixierten Zentrierhülse in die lichtkoppelnde offene Position geschwenkt wird.

Ein Nachteil dabei ist es, dass die jeweilige Abdeckung noch vor dem Erreichen des Lichtwellenleiter-Endes der fixierten Zentrierhülse weggeschwenkt werden muss, so dass zwischen dem Öffnen der Schutzklappen und dem Einführen der Lichtwellenleiter-Enden in die schützende Zentrierhülse die Gefahr des Verschmutzens des Endes des Lichtwellenleiters nicht vollständig ausgeschlossen ist, zumal schon beim Öffnen der Schutzklappen Verunreinigungen in den Innenraum des Gehäuses eingetragen werden können, die noch vor Erreichen der Zentrierhülse das Ende kontaminieren können. Die Kontaminationsgefahr mit Verschmutzungen kann bei dieser Doppelklappenlösung nur minimal vermindert werden, da beide Schutzklappen noch vor dem Erreichen der schützenden Zentrierhülse geöffnet werden müssen.

Aus der Druckschrift EP 0 893 716 A1 ist ein Buchsenteil für eine insbesondere optische Steckverbindung sowie eine Steckverbindung für Lichtwellenleiter bekannt. Auch diese arbeitet mit dem Zwei-Klappen-Prinzip, wobei noch vor Erreichen einer schützenden Zentrierhülse das freie Ende des einzusteckenden Lichtwellenleiter-Endes ungeschützt vor Kontaminationen ist. Der Unterschied dieser Technik zu der Offenbarung der EP 1 004 911 A1 besteht lediglich darin, dass das eine Lichtwellenleiter-Ende das bekannte Gehäuse des Kopplungsteils einseitig als Buchsenteil mit dem einen Lichtwellenleiter verbindet und das zweite Lichtwellenleiter-Ende als Stecker konfektioniert ist.

Aus der Druckschrift US 5,883,995 ist ein Faserverbinder und Adapter bekannt, wobei der Adapter ebenfalls ein Gehäuse mit einem Zwei-Klappen-System aufweist, bei dem das Glasfaserende durch eine schwenkbare Abdeckung freigegeben wird, noch bevor das Faserende eine fest fixierte Zentrierhülse erreicht. Auch mit dieser Lösung wird die Kontaminationsgefahr nicht entscheidend vermindert.

Bei allen bekannten Lösungen besteht keine Möglichkeit, die Enden der Lichtwellenleiter oder deren Optiken erst in einer schützenden zentralen Kopplungsvorrichtung freizugeben.

Aufgabe der Erfindung ist es, ein Kopplungsteil für Lichtwellenleiter und ein Kopplungsverfahren zum optischen Koppeln von zwei konfektionierten Enden von Lichtwellenleitern in einem Kopplungsteil zu schaffen, das die Nachteile im Stand der Technik überwindet, ohne auf Konzepte der Kombination von Steckern und Steckbuchsen zurückzugreifen und ein verbessertes Kopplungsteil für identisch konfektionierte Enden von Lichtwellenleitern sowie ein entsprechend verbessertes Kopplungsverfahren bereitzustellen.

Diese Aufgabe wird mit dem Gegenstand des unabhängigen Anspruchs 1 in Bezug auf ein Kopplungsteil für Lichtwellenleiter und des Anspruchs 19 in Bezug auf ein Kopplungsverfahren zum optischen Koppeln von zwei identisch konfektionierten Enden von Lichtwellenleitern in einem Kopplungsteil gelöst. Vorteilhafte Weiterbildungen der Erfindung ergeben sich aus den abhängigen Ansprüchen.

Gemäß einem ersten Aspekt der Erfindung wird ein Kopplungsteil für Lichtwellenleiter mit einem Gehäuse geschaffen. Das Gehäuse weist einen ersten Aufnahmebereich für ein konfektioniertes erstes Ende eines ersten Lichtwellenleiters auf. Das erste Ende ist mit einer Schutzvorrichtung versehen, die einen schützenden geschlossenen Zustand und einen lichtkoppelnden offenen Zustand aufweisen kann. Das Gehäuse weist einen zweiten Aufnahmebereich für ein konfektioniertes zweites Ende eines zweiten Lichtwellenleiters auf. Das zweite Ende ist mit einer zweiten identischen Schutzvorrichtung versehen, die einen schützenden geschlossenen Zustand und einen lichtkoppelnden offenen Zustand aufweisen kann. Das Gehäuse weist ferner einen zentralen Kopplungsbereich zwischen den Aufnahmebereichen auf, der zum Öffnen der Schutzvorrichtungen an den Enden der Lichtwellenleiter nach deren Einführen in das Gehäuse ausgelegt ist. Der zentrale Kopplungsbereich gemäß dem ersten Aspekt der Erfindung weist eine Kopplungsvorrichtung zum Koppeln der konfektionierten Enden auf, die derart ausgestaltet ist, dass nach Einführen eines konfektionierten Endes eines Lichtwellenleiters in einen Aufnahmebereich des Gehäuses der Beginn des Öffnens der Schutzvorrichtungen erst dann eingeleitet wird, wenn der Beginn der Einführungsphase des jeweils anderen konfektionierten Endes des anderen Lichtwellenleiters in den jeweils anderen Aufnahmebereich des Gehäuses dadurch abgeschlossen ist, dass auch das zweite Ende in die schützende Kopplungsvorrichtung staubdicht zunächst in geschlossenem Zustand in die Kopplungsvorrichtung hineinragt und anschließend die Kopplungsvorrichtung die beiden Schutzvorrichtungen in den lichtkoppelnden offenen Zustand innerhalb der Kopplungsvorrichtung überführt.

Bei einer bevorzugten erfindungsgemäßen Ausführungsform ist vorgesehen, dass zu einem Verbringen der jeweiligen Schutzvorrichtung innerhalb der Kopplungsvorrichtung von einem schützenden geschlossenen Zustand in einen lichtkoppelnden offenen Zustand die Kopplungsvorrichtung mechanische Mittel aufweist. Das hat den Vorteil dass zum Verbringen der jeweiligen Schutzvorrichtung innerhalb der Kopplungsvorrichtung von einem schützenden geschlossenen Zustand in einen lichtkoppelnden offenen Zustand keine zusätzlichen Energiequellen erforderlich sind.

Bei einer weiteren bevorzugten erfindungsgemäßen Ausführungsform ist vorgesehen, dass zu einem Verbringen der jeweiligen Schutzvorrichtung innerhalb der Kopplungsvorrichtung von einem schützenden geschlossenen Zustand in einen lichtkoppelnden offenen Zustand die Kopplungsvorrichtung elektronische Mittel aufweist. Derartige elektronische Mittel haben den Vorteil, dass exakt in einer vordefinierten, vor Umwelteinflüssen geschützten Öffnungsposition die Schutzvorrichtungen innerhalb der Kopplungsvorrichtung von einem schützenden geschlossenen Zustand in einen lichtkoppelnden offenen Zustand verbringbar sind.

Weiterhin ist es erfindungsgemäß vorgesehen, dass zu einem Verbringen der jeweiligen Schutzvorrichtung innerhalb der Kopplungsvorrichtung von einem schützenden geschlossenen Zustand in einen lichtkoppelnden offenen Zustand die Kopplungsvorrichtung magnetische Mittel aufweist. Die magnetischen Mittel zum Verbringen der jeweiligen Schutzvorrichtung innerhalb der Kopplungsvorrichtung von einem schützenden geschlossenen Zustand in einen lichtkoppelnden offenen Zustand haben den Vorteil, dass z.B. Mikropermanentmagnete an geeigneten Positionen angeordnet sein können, so dass ohne zusätzliche Energiequelle die Schutzvorrichtungen innerhalb der Kopplungsvorrichtung von einem schützenden geschlossenen Zustand in einen lichtkoppelnden offenen Zustand verbringbar sind.

Bei einer weiteren erfindungsgemäßen Ausführungsform weist die Kopplungsvorrichtung elektromechanische Mittel auf, die ein Verbringen der jeweiligen Schutzvorrichtung innerhalb der Kopplungsvorrichtung von einem schützenden geschlossenen Zustand in einen lichtkoppelnden offenen Zustand ermöglichen. Derartige elektromechanische Mittel haben den Vorteil, dass exakt in einer vordefinierten vor Umwelteinflüssen geschützten Öffnungsposition die Schutzvorrichtungen innerhalb der Kopplungsvorrichtung von einem schützenden geschlossenen Zustand in einen lichtkoppelnden offenen Zustand verbringbar sind.

Das Kopplungsteil gemäß dem ersten Aspekt der Erfindung hat den Vorteil, dass das Öffnen der geschlossenen Schutzvorrichtungen nicht vor bzw. außerhalb der Kopplungsvorrichtung erfolgt, sondern im Gegensatz zum Stand der Technik, bei dem die Schutzvorrichtungen noch vor, d.h. außerhalb einer Zentrierhülse auszuführen sind, dieses erfindungsgemäß in dem begrenzten und abgedichteten Innenraum der Kopplungsvorrichtung in dem zentralen Kopplungsbereich des Kopplungsteils erfolgt. Darüber hinaus wird ein großräumiges Wegschwenken der Schutzvorrichtungen noch bevor - wie im Stand der Technik - die Lichtwellenleiterenden in eine schützende Zentrierhülse eingeführt werden können, vermieden und damit die Kontaminationsgefahr der Enden der Lichtwellenleiter vorteilhafterweise weiter eingeschränkt; zudem kann die Baulänge und damit die Längserstreckung des Kopplungsteils gegenüber dem Stand der Technik deutlich und kostengünstig vermindert. werden.

Darüber hinaus weist in einer weiteren Ausführungsform der Erfindung die Schutzvorrichtung zwei voneinander spreizbare Abdeckungshälften auf, die in geschütztem geschlossenen Zustand über die Aufnahmebereiche des Gehäuses in die Kopplungsvorrichtung eingeführt und erst innerhalb der Koppelvorrichtung von dem geschlossenen Zustand in den lichtkoppelnden offenen Zustand vorzugsweise durch Spreizung der Abdeckungshälften jeder Schutzvorrichtung überführt werden. Durch das Halbieren der Schutzvorrichtungen in jeweils zwei Abdeckhälften wird eine weitere vorteilhafte Raumersparnis beim Öffnen bzw. Spreizen der Abdeckhälften erreicht und die Längserstreckung der Kopplungsvorrichtung und damit auch die Längserstreckung des Kopplungsteils gegenüber dem Stand der Technik deutlich und kostengünstig vermindert.

Eine weitere Ausführungsform der Erfindung weist innerhalb des zentralen Kopplungsbereichs des Kopplungsteils als Kopplungsvorrichtung eine linear verschiebbare Kopplungshülse als Kopplungsvorrichtung zum Koppeln der konfektionierten Enden auf. Diese ist derart ausgestaltet, dass sie nach Einführen der konfektionierten Enden über die Aufnahmebereiche in die linear verschiebbare Kopplungshülse mit geschlossenen Abdeckhälften der Schutzvorrichtungen der konfektionierten Enden in die linear verschiebbare Kopplungshülse von dem schützenden geschlossenen Zustand der Abdeckhälften in den für die Enden der Lichtwellenleiter lichtkoppelnden offenen Zustand der Abdeckhälften verbringbar ist.

Diese Ausführungsform hat den Vorteil, dass die im Kopplungsbereich beliebig linear verschiebbare Kopplungshülse ermöglicht, dass eines der beiden konfektionierten Enden der zu koppelnden Lichtwellenleiter mit seiner geschlossenen Schutzvorrichtung (aus Abdeckhälften) die verschiebbare Kopplungshülse verschieben kann, bis sein erstes konfektioniertes Ende in einer zentralen Position in dem zentralen Kopplungsbereich in geschlossenem Zustand verriegelt wird, ohne dass die Kopplungshülse wirksam wird. Vielmehr ragt das erste konfektionierte Ende des ersten Lichtwellenleiters mit seinen Abdeckhälften in der geschlossener Position in die verschiebbare Kopplungshülse hinein, ohne den Zustand der geschlossenen Abdeckhälften zu ändern.

Somit bleibt das erste konfektionierte Kopplungsende des Lichtwellenleiters vor einer Kontamination geschützt. Das zweite konfektionierte Ende ist dann in der Lage, wenn es in den zweiten Aufnahmebereich eingeführt wird, die linear verschiebbare Kopplungshülse vor sich her zu schieben, bei immer noch geschlossenen Abdeckhälften sowohl des ersten als auch des zweiten konfektionierten Endes des ersten und des zweiten Lichtwellenleiters; und erst, wenn beide Abdeckungen der Enden der Lichtwellenleiter vollständig abgedichtet in dem linear verschiebbaren Kopplungsteil angeordnet sind, werden gemäß der erfindungsgemäßen Lehre des Anspruchs 1 jeweils die Abdeckhälften der konfektionierten Enden in der zentralen Kopplungsvorrichtung von einem schützenden verschlossenen Zustand in einen lichtkoppelnden offenen Zustand übergehen.

Durch eine derartige Gestaltung der Kopplungshülse, im Gegensatz zu den aus dem Stand der Technik bekannten feststehenden Zentrierhülsen, ist es möglich, dass die erfindungsgemäße Kopplungshülse auf beiden Eingangsseiten völlig dichtend abgeschlossen ist, bevor der Übergang der Abdeckhälften in einen lichtkoppelnden geöffneten Zustand erfolgt. Durch das Abdichten der konfektionierten Enden an der verschiebbaren Kopplungshülse kann gegenüber dem Stand der Technik auf Eingangsschutzklappen an Öffnungen zu den Aufnahmebereichen des Kopplungsgehäuses des Kopplungsteil in kostengünstiger Weise und unter vorteilhafter konstruktiver Vereinfachung verzichtet werden, und damit die aus dem Stand der Technik aufwendige und komplexe sowie störungsanfällige Lösung überwunden werden.

Zur Abdichtung sind in einer weiteren Ausführungsform der Erfindung die Frontseiten der konfektionierten Enden der Lichtwellenleiter derart ausgebildet, dass der Querschnitt der Frontseiten dem Innenquerschnitt der verschiebbaren Kopplungshülse Aerosol-dichtend angepasst ist, d.h. den Innenquerschnitt in seinen Randbereichen dichtend überragt. Der gemäß obigen Ausführungen nun innerhalb der Kopplungshülse stattfindende Öffnungsvorgang der Abdeckhälften der konfektionierten Enden der Lichtwellenleiter ist aufgrund der Verschiebbarkeit der Kopplungshülse, die mit dem Einführen des zweiten konfektionierten Endes des zweiten Lichtwellenleiters auf das bereits fixierte erste konfektionierte Ende des ersten Lichtwellenleiters bewegungsmäßig begrenzt wird unter vollständigem Schutz vor einer Kontamination durch die Umgebung ausgeführt werden.

Anstelle der zwei Abdeckhälften pro Abdeckung können auch mehrere Abdeckteile pro Schutzvorrichtung vorgesehen werden, die gemeinsam mit entsprechenden gegenüberliegenden Abdeckteilen der Schutzvorrichtung des zweiten konfektionierten Endes des Lichtwellenleiters auseinandergespreizt werden, um den lichtkoppelnden Zustand für die konfektionierten Enden der Lichtwellenleiter zu erreichen. Bei einer weiteren Ausführungsform der Erfindung werden die Abdeckhälften federelastisch vorgespannt" so dass die zwei oder die genannten mehreren Abdeckteile federelastisch vorgespannt, in dem geschlossenen Zustand aufeinander liegend das jeweilige Ende des Lichtwellenleiters schützen. Erst beim endgültigen Zusammenschieben der konfektionierten Lichtwellenleiter-Enden innerhalb des linear verschiebbaren Kopplungsteils werden diese Abdeckteile auseinandergespreizt und in den lichtkoppelnden Zustand innerhalb des entsprechend konfigurierten verschiebbaren Kopplungsteils versetzt.

Die Außenabmessungen der verschiebbaren Kopplungshülse sind größer als die Innenabmessungen der Aufnahmebereiche des Kopplungsteils, so dass das verschiebbare Kopplungsteil nicht über die Aufnahmebereiche in den Kopplungsbereich des Kopplungsteils eingeführt werden kann. Deshalb ist es in einer weiteren Ausführungsform der Erfindung vorgesehen, dass das Gehäuse in Längsrichtung eine Trennfuge zum Öffnen und Schließen des Gehäuses und zum Einbringen der linear verschiebbaren Kopplungshülse in einen zur Aufnahme der linearen Kopplungshülse räumlich gegenüber den Aufnahmebereichen vergrößerten zentralen Kopplungsbereich aufweist.

Die Trennfuge ermöglicht somit in vorteilhafter Weise, dass die Kopplungshülse mit ihren Außenabmessungen in den zentralen Kopplungsbereich des Kopplungsteils bei getrennten Gehäusehälften eingelegt werden kann. Gleichzeitig wird damit auch eine Begrenzung der linearen Verschiebbarkieit der Kopplungshülse festgelegt. Die Kopplungshülse kann somit nicht über den zentralen Kopplungsbereich hinaus in dem Kopplungsteil linear hin und her verschoben werden. Jedoch reicht die begrenzte Verschiebbarkeit der Kopplungshülse aus, um einem einzelnen eingeführten konfektionierten Ende auszuweichen, bevor die schützende Schutzvorrichtung aus mindesten zwei oder mehreren Abdeckteilen vorzeitig in den lichtkoppelnden Zustand versetzt wird.

Bei einer weiteren Ausführungsform der Erfindung sind das Gehäuse, die Aufnahmebereiche, die konfektionierten Enden der Lichtwellenleiter, der Kopplungsbereich und die darin verschiebbare Kopplungshülse mit äußeren eckigen Umrissen im Gegensatz zu den im Stand der Technik bekannten Zentrierhülsen mit rundem Querschnitt ausgestattet. Dies hat den Vorteil, dass entsprechende Verrastungsmittel eindeutig entsprechenden Aussparungen in Gehäuseinnenwänden zugeordnet werden können. Weiter hat dies den Vorteil, dass genügend Innenraum in der Kopplungshülse geschaffen werden kann, um das Öffnen und Schließen der Abdeckungen der konfektionierten Enden der Lichtwellenleiter geschützt vor der Umwelt auszuführen.

Die Kopplungshülse mit ihrem äußeren Querschnitt ist in vorteilhafter Weise mit ihrem äußeren Querschnitt einem eckigen Innenquerschnitt des zentralen Kopplungsbereichs innerhalb des Gehäuses angepasst und die Kopplungshülse weist eine Längsausdehnung lₕ auf, die geringer als die Längserstreckung lₖ des zentralen Kopplungsbereichs innerhalb des Gehäuses ist und vorzugsweise die Hälfte lₖ/2 der Längserstreckung lₖ oder weniger als die Hälfte des zentralen Kopplungsbereichs aufweist, um eine ausführbare Verschiebbarkeit innerhalb des Kopplungsbereichs des Kopplungsteils aufzuweisen.

Bei einer weiteren Ausführungsform der Erfindung werden die Längserstreckungen der einzelnen Bereiche derart aufeinander abgestimmt, dass ein relativ komprimiertes Kopplungsteil realisierbar wird. Dazu weisen die Aufnahmebereiche jeweils ein Drittel der Gesamtlängserstreckung L des Kopplungsteils auf, während ein drittes Drittel für die Längserstreckung des zentralen Kopplungsbereichs reserviert ist. Daraus ergibt sich, dass der zentrale Kopplungsbereich eine Länge lₖ = 1/3 L sein kann, die Längserstreckung des ersten Aufnahmebereichs l₄ = 1/3 L sein kann und die Längserstreckung des zweiten Aufnahmebereichsebenfalls l₆ = 1/3 L sein kann.

Da die Kopplungshülse beliebig linear in dem Kopplungsbereich mit einer Längserstreckung von lₖ = 1/3 L vorgesehen ist, kann die Längserstreckung der Kopplungshülse auf lₕ =½ lₖ = 1/6 L beschränkt sein. Demnach kann die maximale Verschiebbarkeit der Kopplungshülse lₗ = ½ lₖ sein. Mit diesen Längserstreckungsverhältnissen kann sichergestellt werden, dass ein einzelnes konfektioniertes Lichtwellenleiter-Ende bis zu seiner endgültigen Position in dem zentralen Kopplungsbereich eingeschoben und arretiert werden kann, ohne dass die Abdeckungshälften oder beispielsweise Abdeckungsviertel der schützenden Abdeckung in einen lichtkoppelnden Zustand vorzeitig aufgespreizt werden, weil die Kopplungshülse durch ihre lineare Verschiebbarkeit entsprechend im Kopplungsbereich des Kopplungsteils ausweichen kann.

Bei einer weiteren Ausführungsform der Erfindung ist der eckige Innenquerschnitt der linear verschiebbaren Kopplungshülse dem jeweiligen Außenquerschnitt der Schutzvorrichtungen der konfektionierten Enden in ihrem lichtkoppelnden offenen Zustand angepasst. Dadurch wird in vorteilhafter Weise gewährleistet, dass sich die Abdeckungshälften innerhalb der Kopplungshülse in den lichtkoppelnden Zustand ungehindert aufspreizen können, sobald die konfektionierten Enden der Lichtwellenleiter in Eingangsquerschnitten der verschiebbaren Kopplungshülse im geschlossenen Zustand eingeführt und durch Verschieben der Kopplungshülse zusammen mit einem der konfektionierten Enden der Lichtwellenleiter gegenüberliegend zu einem anderen der konfektionierten Enden der Lichtwellenleiter bis zu einem geöffneten gespreizten lichtleitenden Zustand geöffnet sind.

Ferner ist vorgesehen, dass die linear verschiebbare Kopplungshülse zwei einander gegenüberliegende innere Seitenwände aufweist, die jeweils eine mittlere vorspringende Führungsschiene aufweisen, die sich in Richtung der linearen Verschiebbarkeit der Kopplungshülse erstrecken. Die Breite der Führungsschienen ist derart vorgesehen, dass sie an entsprechende Profilnuten der jeweiligen Abdeckhälften der Schutzvorrichtungen der konfektionierten Enden angepasst ist, so dass beim Verschieben der verschiebbaren Kopplungshülse die Abdeckhälften der Verschlussvorrichtungen der konfektionierten Enden gegen einander aufgespreizt werden können, indem die Führungsschienen auf den inneren Seitenwänden der verschiebbaren Kopplungshülse mit den entsprechenden Profilnuten der jeweiligen Abdeckhälften der konfektionierten Enden gleitverschiebbar in Eingriff bringbar sind. Die Profilnuten können dazu in Bezug auf die konstante Breite der Führungsschiene beispielsweise eine linear verlaufende Schräge oder abgeknickte Schräge oder eine konkave Krümmung zur Längsrichtung der Kopplungshülse aufweisen.

Dazu ist vorgesehen, dass das Profil der Profilnuten derart ausgebildet ist, dass beim Verschieben der Führungsschienen zusammen mit der verschiebbaren Kopplungshülse die Profilnuten eine Kulisse bilden, die ein Spreizen der beiden Abdeckhälften in einen offenen lichtkoppelnden Zustand der Schutzvorrichtungen unterstützt. Dieses Spreizen von Abdeckhälften der Schutzvorrichtungen hat gegenüber dem aus dem Stand der Technik bekannten schwenkbaren Klappen den Vorteil, dass auf deutlich kürzerer Länge der Wechsel von einem geschlossenen Zustand in einen offenen Zustand ausführbar wird, so dass eine entsprechende Verkürzung der Längserstreckung der verschiebbaren Kopplungshülse ausreicht, um diesen Wechsel in den lichtkoppelnden offenen Zustand innerhalb der verschiebbaren Kopplungshülse zu erreichen. Auch die Länge der Verschiebbarkeit und damit die Länge des zentralen Kopplungsbereichs können gegenüber einem Klapp- oder Schwenkmechanismus deutlich verkürzt werden.

Bei einer weiteren Ausführungsform der Erfindung ist vorgesehen, dass das Gehäuse in den Aufnahmebereichen Einführungsgleitflächen und Verriegelungsaussparungen aufweist, die derart gestaltet sind, dass Schnapphaken, die an Außenflächen der konfektionierten Enden angeordnet sind, in den Einführungsgleitflächen der Gehäuseinnenwände vorgespannt und in die Verriegelungsaussparungen zum Verriegeln der konfektionierten Enden in den Aufnahmebereichen nach Erreichen einer zentralen Kopplungsposition in dem zentralen Kopplungsbereich des Kopplungsteils in dem entsprechenden lichtkoppelnden offenen Zustand der Abdeckungshälften einrastbar sind.

Dabei ermöglicht die Verschiebbarkeit der Kopplungshülse, dass bereits eines der konfektionierten Enden der Lichtwellenleiter in einen Aufnahmebereich bis in eine Kopplungsposition des zentralen Kopplungsbereichs eingeführt und verriegelt wird, ohne dass die spreizbaren Abdeckhälften in den lichtkoppelnden offenen Zustand übergegangen sind, da die Frontfläche des konfektionierten Endes die Kopplungshülse vor sich her schieben kann, ohne dass die Abdeckhälften in den lichtkoppelten Zustand gespreizt werden.

Die nachfolgenden Ausführungsformen der Erfindung beziehen sich im Wesentlichen auf identische konfektionierte Enden von jeweils zu koppelnden Lichtwellenleitern in dem oben beschriebenen Kopplungsteil. Dabei weist das konfektionierte Ende jeweils eine Schutzvorrichtung auf, die von zwei spreizbaren Abdeckhälften gebildet wird, die derart gestaltet sind, dass die Abdeckhälften in einem geschlossenen Zustand unter einer Vorspannung aufeinander liegen und die Enden des Lichtwellenleiters schützen. Sobald die konfektionierten Enden in dem Kopplungsteil eingebaut sind, werden die Abdeckhälften auseinander in einen lichtkoppelnden offenen Zustand gespreizt, sobald sie in der zentralen Kopplungsposition der verschiebbaren Kopplungshülse fixiert sind. Die Konfektionierung der Enden ist dem oben erörterten Kopplungsteil derart angepasst, dass in allen Phasen der Kopplung sichergestellt ist, dass die Gefahr von Verunreinigungen der Enden der Lichtwellenleiter durch Kontaminationen verringert ist, so dass der lichtkoppelnde offene Endzustand nicht beeinträchtigt wird.

Um das jeweilige konfektionierte Ende in dem Kopplungsteil in Längsrichtung zu fixieren, weist jedes konfektionierte Ende die oben erwähnten Schnapphaken auf, die an Außenflächen des konfektionierten Endes angeordnet sind und derart gestaltet sind, dass sie an den Einführungsgleitflächen der Aufnahmebereiche des Kopplungsteils vorgespannt werden. Diese Schnapphaken rasten dann in Verriegelungsaussparungen der Aufnahmebereiche des Kopplungsteils ein, so dass nach Verriegeln beider konfektionierten Enden die Abdeckhälften der konfektionierten Enden in einem auseinander gespreizten Zustand sind, der eine Lichtkopplung zulässt.

Bei einer weiteren erfindungsgemäßen Ausführungsform der konfektionierten Enden weisen diese mindestens eine Schwenkachse auf, um welche die Abdeckhälften von einer vorgespannten geschlossenen Position in eine gespreizte offene Position spreizbar sind. Alternativ kann auch jede einzelne Abdeckhälfte jeweils eine Schwenkachse aufweisen, um welche die Abdeckhälfte in den lichtkoppelnden offenen Zustand auseinandergeschwenkt wird. Zwei in einem Abstand angeordnete Schwenkachsen für jede Abdeckhälfte haben den Vorteil, dass der Raum, der für das Schwenken beziehungsweise Spreizen erforderlich ist, in seiner Längserstreckung und Quererstreckung vermindert ist. Auf den Schwenkachsen sind voneinander getrennte Schwenkgelenke beidseitig des Lichtwellenleiters angeordnet, so dass in vorteilhafter Weise der Lichtwellenleiter mittig zwischen den Schwenkgelenken vorzugsweise zu einer Optik geführt werden kann.

Bei einer weiteren Ausführungsform der Erfindung weist das konfektionierte Ende für jeden der Lichtwellenleiter U-förmige Federelemente auf, deren Schenkel in die Abdeckhälften eingebettet und deren Basen im Bereich der mindestens einen Schwenkachse angeordnet sind. Diese U-förmigen Federelemente sind mit ihren Schenkeln derart vorgespannt, dass sie die Abdeckhälften im geschlossenen Zustand aufeinander pressen. Zum Spreizen der Abdeckhälften weisen diese seitliche Profilnuten auf, in welche die Führungsschienen der Seitenwände der Kopplungshülse eingreifen und die Abdeckhälften gegen die Federvorspannung voneinander spreizen.

Weiterhin ist erfindugnsgemäß vorgesehen, dass die konfektionierten Enden eine Optik aufweisen, die von den Abdeckhälften im geschlossenen Zustand schützend umschlossen ist. Derartige Optiken weisen Linsensysteme auf, welche den konzentrierten Strahl im Zentrum der Lichtwellenleiter für eine optimale Lichtkopplung auf einer Seite aufweiten und auf der gegenüberliegenden Seite erneut auf das Zentrum des Lichtwellenleiters konzentrieren.

Weiterhin ist es bei einer Ausführungsform der Erfindung vorgesehen, dass die konfektionierten Enden eine eckige Frontseite aufweisen, über welche die Abdeckhälften der Schutzvorrichtung in Längsrichtung herausragen, wobei die Frontseite eine Querschnittsfläche aufweist, die dem Innenquerschnitt der Aufnahmebereiche des Kopplungsteils angepasst und in der Lage ist im Kontakt mit der linear verschiebbaren eckigen Kopplungshülse, diese aufgrund angepasster Abmessungen in dem zentralen Kopplungsbereich des Kopplungsteils linear zu verschieben. Das bedeutet, dass selbst im eingerasteten Zustand der Schnapphaken eines einzelnen konfektionierten Endes in den Aussparungen eines Aufnahmebereichs des Kopplungsteils die Schutzvorrichtung mit ihren Abdeckhälften in der zentralen Position des zentralen Kopplungsbereichs des Kopplungsteils geschlossen bleibt und die Kopplungshülse mithilfe der Frontfläche vor sich her schiebt, ohne dass die Führungsschienen der Innenwände der Kopplungshülse in die Nuten der Abdeckhälften eingreifen.

Erst wenn von der gegenüberliegenden Seite her das zweite konfektionierte Ende mit dessen Frontseite die Kopplungshülse in Längsrichtung verschiebt, werden die Führungsschienen der Seitenwände der Kopplungshülse in Richtung der Profilnuten der Abdeckhälften beider Schutzvorrichtungen linear verschoben, so dass die Schutzvorrichtungen innerhalb der linear verschiebbaren Kopplungshülse gespreizt und in den lichtkoppelnden offenen Zustand versetzt und gleichzeitig verriegelt werden.

Ein weiterer Aspekt der Erfindung betrifft Kopplungsverfahren zum optischen Koppeln von zwei konfektionierten Enden von Lichtwellenleitern in einem Kopplungsteil, wobei das Kopplungsteil ein Gehäuse, Aufnahmebereiche für die konfektionierten Enden und einen zentralen Kopplungsbereich aufweist, in dem eine Kopplungsvorrichtung ausgebildet ist, wobei das Kopplungsverfahren die nachfolgenden Verfahrensschritte aufweist. Zunächst wird ein erstes konfektionierten Endes eines ersten Lichtwellenleiters in einen ersten Aufnahmebereich des Kopplungsteils, der einem zweiten Aufnahmebereich gegenüberliegend angeordnet ist, eingeführt, bis eine zentrale Position in dem Kopplungsbereich erreicht ist.

Dabei wird eine geschlossene Schutzvorrichtung in eine Kopplungsvorrichtung in dem zentralen Kopplungsbereich eingeschoben. Danach wird ein zweitens konfektioniertes Ende eines zweiten Lichtwellenleiters in einen zweiten Aufnahmebereich des Kopplungsteils eingeschoben, bis eine zweite Schutzvorrichtung in geschlossenem Zustand in der Kopplungsvorrichtung in dem zentralen Kopplungsbereich des Kopplungsteils angeordnet ist. Abschließend wird ein gleichzeitiges aufeinander Zuschieben beider konfektionierter Enden der Lichtwellenleiter in die Kopplungsvorrichtung unter Öffnen beider Schutzvorrichtungen in einen lichtkoppelnden offenen Zustand innerhalb der Kopplungsvorrichtung durchgeführt.

Dieses Kopplungsverfahren hat den Vorteil, dass ein Öffnen der Schutzvorrichtungen der konfektionierten Enden der Lichtwellenleiter erst ausgeführt wird, wenn beide Schutzvorrichtungen innerhalb der Kopplungsvorrichtung in dem zentralen Kopplungsbereich des Kopplungsteils angeordnet sind. Vorher sind weder das eine noch das andere Ende der Lichtwellenleiter einer Kontamination durch Umgebungsverschmutzungen ausgesetzt und keine der beiden Schutzvorrichtungen - anders als im Stand der Technik - schon vor einem Einführen in eine schützende Zentrierhülse des Kopplungsteils geöffnet. Somit wird die Verschmutzungsgefahr in vorteilhafter Weise deutlich vermindert.

Eine Durchführungsform des erfindungsgemäßen Kopplungsverfahrens umfasst ferner ein lineares Verschieben einer Kopplungshülse, die als Kopplungsvorrichtung dient. Während des Einführens des ersten konfektionierten Endes des ersten Lichtwellenleiters in den ersten Aufnahmebereich des Kopplungsteils werden Schnapphaken auf Außenflächen des konfektionierten Endes in Verriegelungsaussparungen in Gehäuseinnenwänden arretierend eingerastet. Beim Einführen des zweiten konfektionierten Endes des zweiten Lichtwellenleiters in den zweiten Aufnahmebereich des Kopplungsteils, der dem ersten Aufnahmebereich gegenüberliegend angeordnet ist, werden Schnapphaken auf Außenflächen des konfektionierten zweiten Endes in Arretierungsaussparungen der Gehäuseinnenwände des zweiten Aufnahmebereichs arretierend eingerastet.

Dabei wird die linear verschiebbare Kopplungshülse in dem zentralen Kopplungsbereich zunächst durch das erste konfektionierte Ende vor sich hergeschoben ohne durch das die Schutzvorrichtung öffnet, so dass die Abdeckhälften bis zu der zentralen Kopplungsposition geschlossen bleiben. Sobald das zweite konfektionierte Ende in eine zentrale Kopplungsposition linear verschoben ist, werden die jeweiligen Abdeckhälften beider Schutzvorrichtungen der konfektionierten Enden von dem geschlossenen Zustand in einen lichtkoppelnden offenen Zustand durch Eingreifen von Führungsschienen der inneren Seitenwände der Kopplungshülse in Profilnuten der Abdeckhälften gespreizt.

Mit diesem Verfahren, können unter Einsatz der konfektionierten Enden der Lichtwellenleiter, der erfindungsgemäßen verschiebbaren Kopplungshülse und der erfindungsgemäßen Konstruktion des Kopplungsteils die Enden der Lichtwellenleiter miteinander optisch bei offenen Abdeckhälften in Wechselwirkung treten und die Gefahr einer Kontamination der Enden der Lichtwellenleiter bzw. der daran angeschlossenen Optiken durch Umgebungseinflüsse deutlich vermindert werden.

Ausführungsformen der Erfindung werden nun anhand der beigefügten Figuren näher erläutert.
- Figur 1: zeigt eine schematische perspektivische auseinander gezogene Ansicht eines erfindungsgemäßen Kopplungsteils mit konfektionierten Enden von Lichtwellenleitern;
- Figur 2: zeigt eine schematische perspektivische Ansicht des erfindungsgemäßen Kopplungsteils mit einem einseitig bis in eine zentrale Kopplungsposition eingeschobenen ersten konfektionierten Ende eines ersten Lichtwellenleiters;
- Figur 3: zeigt eine schematische perspektivische Ansicht des erfindungsgemäßen Kopplungsteils mit eingeschobenen konfektionierten Enden der Lichtwellenleiter in der zentralen Kopplungsposition in einem lichtkoppelnden Zustand;
- Figur 4: zeigt eine schematische perspektivische Ansicht des erfindungsgemäßen Kopplungsteils mit eingeschobenen konfektionierten Enden der Lichtwellenleiter in teilweise aufgeschnittenem Längsschnitt;
- Figur 5: zeigt eine schematische Draufsicht auf das erfindungsgemäße Kopplungsteils mit eingeschobenen konfektionierten Enden der Lichtwellenleiter;
- Figur 6: zeigt eine schematische perspektivische Ansicht des erfindungsgemäßen Kopplungsteils mit eingeschobenen konfektionierten Enden der Lichtwellenleiter und aufgeschnittenem Längsschnitt eines der konfektionierten Enden der Lichtwellenleiter entlang der Schnittebene A-A der Figur 5;
- Figur 7: zeigt einen schematischen Längsschnitt durch das erfindungsgemäße Kopplungsteil mit eingerasteten Schnapphaken der eingeschobenen konfektionierten Enden der Lichtwellenleiter entlang der Schnittebene B-B der Figur 6;
- Figur 8: zeigt eine schematische perspektivische Ansicht des erfindungsgemäßen Kopplungsteils mit eingeschobenen und verriegelten konfektionierten Enden der Lichtwellenleiter.

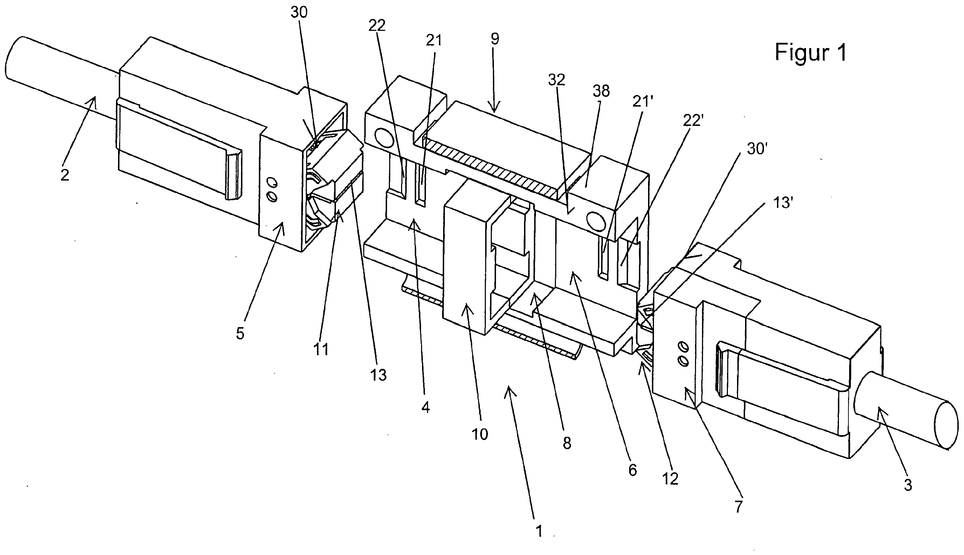

Figur 1 zeigt eine schematische perspektivische auseinander gezogene Ansicht eines Kopplungsteils 1 mit konfektionierten Enden 5 und 7 von Lichtwellenleitern 2 und 3. Das Kopplungsteil 1 weist ein Gehäuse 9 auf, von dem in Figur 1 lediglich eine Gehäusehälfte 38 zu sehen ist, die mit einer weiteren Gehäusehälfte über eine Trennfuge 32 verbunden ist. Aufgrund des Fehlens der zweiten Gehäusehälfte wird der Innenraum des Kopplungsteils 1 in dieser Figur sichtbar. Das Gehäuse 9 weist, wie ferner in Figur 1 zu sehen ist, einen ersten Aufnahmebereich 4 zur Aufnahme eines konfektionierten ersten Endes 5 auf, das in Figur 1 noch entfernt von dem Kopplungsteil 1 in der auseinander gezogenen Darstellung gezeigt wird. Das erste konfektionierte Ende 5 ist mit einer Schutzvorrichtung 11 versehen, die aus einer eckigen Frontseite 30 herausragt, wobei sich die Schutzvorrichtung 11 in einem das Lichtleiterwellen-Ende schützenden geschlossenen Zustand 13 befindet.

Das Gehäuse 9 weist einen zweiten Aufnahmebereich 6 für das konfektionierte zweite Ende 7 eines zweiten Lichtwellenleiters 3 auf. Das zweite Ende 7 ist mit einer identischen Schutzvorrichtung 12 ausgestattet, die in Figur 1 in einem schützenden geschlossenen Zustand 13' ist und die aus der Frontseite 30' des zweiten konfektionierten Endes 7 des zweiten Lichtwellenleiters 3 herausragt.

Ferner weist das Gehäuse 9 einen zentralen Kopplungsbereich 8 auf, der zwischen den Aufnahmebereichen 4 und 6 angeordnet ist und der ausgelegt ist zum Öffnen der in Figur 1 noch geschlossenen Schutzvorrichtungen 11 und 12 an den Enden der Lichtwellenleiter, nach deren Einführung in das Gehäuse 9. Dieser zentrale Kopplungsbereich 8 weist eine Kopplungsvorrichtung 10 zum Koppeln der konfektionierten Enden 5 und 7 auf.

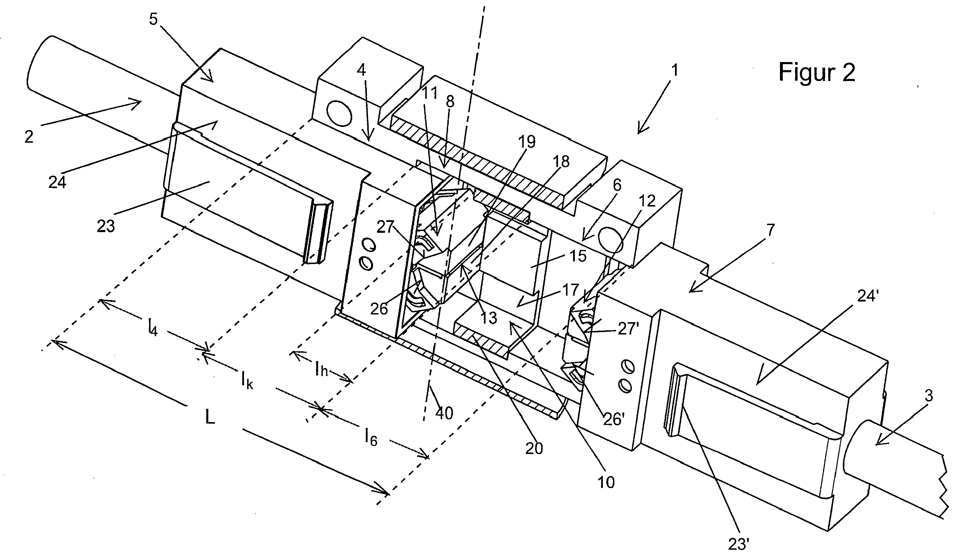

Die Kopplungsvorrichtung 10 ist derart ausgestaltet, dass nach Einführen eines konfektionierten Endes 5 (beispielsweise des Lichtwellenleiters 2) in den Aufnahmebereich 4 des Gehäuses 9 der Beginn des Öffnens der Schutzvorrichtungen 11 und 12 erst dann eingeleitet wird, wenn der Beginn der Einführungsphase des anderen konfektionierten Endes 7 des anderen Lichtwellenleiters 3 in den jeweils anderen Aufnahmebereich 6 des Gehäuses 9 abgeschlossen ist. Die nachfolgenden Figuren 2 bis 8 sollen diese Funktionalität des zentralen Kopplungsbereichs 8 mit der Kopplungsvorrichtung 10 näher erläutern.

Figur 2 zeigt dazu eine schematische perspektivische Ansicht des erfindungsgemäßen Kopplungsteils 1 mit einem einseitig, bis in eine zentrale Kopplungsposition 40 eingeschobenen ersten konfektionierten Endes 5 eines ersten Lichtwellenleiters 2. Die Kopplungsvorrichtung 10 ist als linear verschiebbare eckige Kopplungshülse 20 ausgebildet und wurde beim Einschieben des ersten konfektionierten Endes 5 des Lichtwellenleiters 2 verschoben, ohne dass sich die Schutzvorrichtung 11 geöffnet hat. Sie ist vielmehr in ihrem geschlossenen Zustand 13 verblieben, so dass zwei Abdeckhälften 18 und 19 der Schutzvorrichtung 11 nach wie vor auch in der zentralen Position 40 geschlossen sind und die linear verschiebbare eckige Kopplungshülse 20 bis an eine Grenze des zentralen Kopplungsbereichs 8 zu dem zweiten Aufnahmebereich 6 hin verschoben ist. Diese linear verschiebbare Kopplungshülse 20 weist in Längsrichtung auf einer inneren Seitenwand 17 eine Führungsschiene 15 auf, die deutlich in Figur 2 erkennbar ist.

Außerdem ist der Innenquerschnitt des Hohlraums der Kopplungshülse 20 geringer als der Innenquerschnitt der Aufnahmebereiche 4 und 6, so dass die konfektionierten Enden 5 und 7 in der Lage sind, die linear verschiebbare Kopplungshülse 20 zu verschieben. Dazu ist die Längserstreckung lₖ des zentralen Kopplungsbereichs 8 deutlich größer als die lineare Längserstreckung lₕ der Kopplungshülse 20, wobei die Kopplungshülse 20 auf der Länge lₖ linear verschiebbar gleiten kann und in der in Figur 2 gezeigten Phase, bei der lediglich eine der beiden konfektionierten Enden in das Gehäuse 9 bereits vollständig bis zur Kopplungsposition 40 eingeführt ist, nicht wirksam werden kann.

Dabei sind die Längenverhältnisse der Gesamtlänge L des Kopplungsteils zu etwa einem Drittel für den ersten Aufnahmebereich 4 mit der Länge l₄ vorgesehen und ein weiteres Drittel ist für den zweiten Aufnahmebereich 6 mit der Länge l₆ reserviert, so dass das letzte und dritte Drittel mit der Länge lₖ für den zentralen Kopplungsbereich verbleibt. Innerhalb dieser Länge l_{K} erstreckt sich die Länge lₕ der linear bewegbaren Kopplungshülse 20 und nimmt dabei weniger als die Hälfte der Kopplungslänge lₖ oder weniger ein, um sicherzustellen, wenn zunächst nur eines der beiden konfektionierten Enden 5 bzw. 7 bis in die Kopplungsposition 40 des zentralen Kopplungsbereichs 8 eingeschoben ist, dass die Kopplungshülse 20 zum Öffnen der Schutzvorrichtungen 11 bzw. 12 nicht wirksam wird.

Die Führungsschiene 15 ist derart gestaltet, dass sie mit Nutprofilen 26, 27 der Schutzvorrichtungen 11 und 12 zum Öffnen derselben in den offenen lichtkoppelnden Zustand, zusammenwirkt. Dazu weist die untere Abdeckhälfte 18 eine gekrümmte Kante des Nutprofils 26 auf. Sobald das in Figur 2 gezeigte zweite konfektionierte Ende 7 des Lichtwellenleiters 3, das hier nur lediglich teilweise in einen Anfangsbereich des Aufnahmebereichs 6 eingeschoben ist, tiefer in den Aufnahmebereich 6 eindringt und den zentralen Bereich 8 erreicht, wird die Kopplungshülse 20 wirksam, da nun die Führungsschiene 15 mit den Nutprofilen 26 und 27 des ersten konfektionierten Endes 5 und damit der ersten Schutzvorrichtung 11 zusammenwirken und gleichzeitig mit den Nutprofilen 26' und 27' der zweiten Schutzvorrichtung 12 in Eingriff stehen kann.

Beim Einschieben des ersten konfektionierten Endes 5 des ersten Lichtwellenleiters 2 bis in die zentrale Position 40 des Kopplungsbereichs 8 werden gleichzeitig Schnapphaken 23 auf den Seitenflächen 24 des ersten konfektionierten Endes 5 des Lichtwellenleiters 2 wirksam und verriegeln das erste konfektionierte Ende 5 des Lichtwellenleiters 2 in der gezeigten Position, indem die Schnapphaken 23 auf den Außenflächen 24 zunächst, wie in Figur 1 gezeigt, an Einführungsgleitflächen 22 des ersten Aufnahmebereichs 4 vorgespannt werden und beim weiteren Einschieben des konfektionierten Endes 5 in den Aufnahmebereich 4 dann in entsprechend angeordneten Verriegelungsaussparungen 21, wie sie in Figur 1 noch zu sehen sind, einrasten. In der in Figur 2 gezeigten Position sind sowohl die Einführungsgleitflächen als auch die Verriegelungsaussparungen durch das eingeführte konfektionierte Ende 5 nicht sichtbar bedeckt.

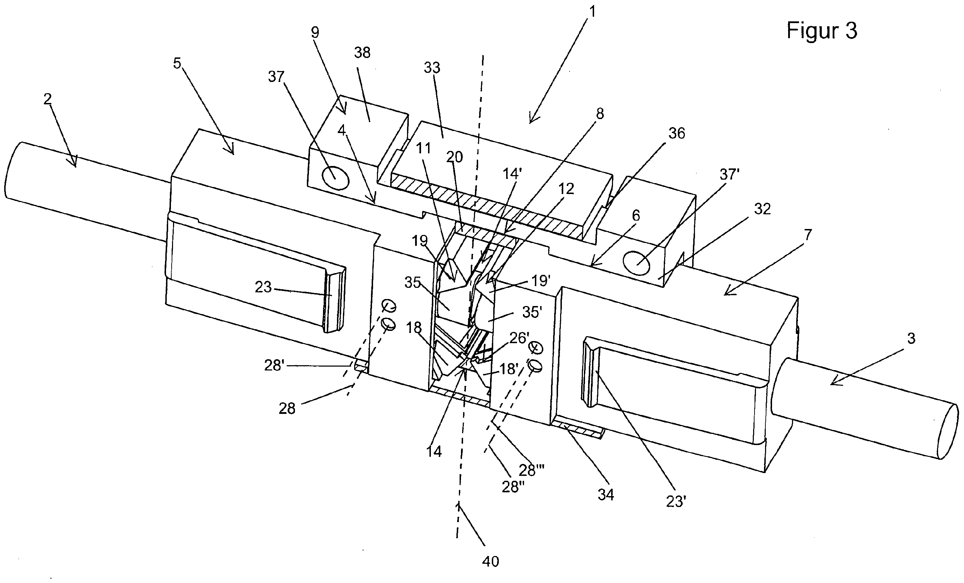

Figur 3 zeigt eine schematische perspektivische Ansicht des erfindungsgemäßen Kopplungsteils 1 mit eingeschobenen konfektionierten Enden 5 und 7 der Lichtwellenleiter 2 und 3 in der zentralen Kopplungsposition 40 in einem lichtkoppelnden Zustand 14 der in dieser Ausführungsform der Erfindung eingesetzten Linsensysteme der Optiken 35 und 35'. In diesem lichtkoppelnden Zustand 14 zwischen den Optiken 35 und 35' sind die unteren Abdeckhälften 18 bzw. 18' durch Eingriff der in Figur 2 gezeigten Führungsschiene 15 der Kopplungshülse 20 nach unten gegenüber einer Federvorspannung und die oberen Abdeckhälften 19 und 19' der Schutzvorrichtungen 11 und 12 nach oben gespreizt, wobei dieser Vorgang geschützt innerhalb der linear bewegbaren Hülse 20 des zentralen Bereichs 8 des Kopplungsteils 1 erfolgt.

Dazu weist das erste konfektionierte Ende 5 zwei Schwenkachsen 28 und 28' für die untere Abdeckhälfte 18 beziehungsweise die obere Abdeckhälfte 19 auf und das zweite konfektionierte Ende 7 weist dazu die Schwenkachsen 28" und 28"' für die entsprechenden Abdeckhälften 18' und 19' auf. Der Innenquerschnitt der linear verschiebbaren und nun in der zentralen Position 40 fixierten Kopplungshülse 20 ist an den nicht koppelnden offenen Zustand 14 der Abdeckhälften 18 und 19 bzw. 18' und 19' angepasst, so dass die volle Spreizung der Abdeckhälften 18 und 19 bzw. 18' und 19' geschützt innerhalb der Kopplungshülse 20 erfolgen kann.

Gleichzeitig ist in Figur 3 der Zusammenbau des Gehäuses 9 erkennbar; einerseits durch die gezeigten Passstiftbohrungen 37 und 37', in die Passstifte auf der Trennfuge 32 des Gehäuses 9, um einen Passungssitz zu erreichen, einschiebbar sind, und anderseits ist zusätzlich zu der Gehäusehälfte 38 in Figur 3 ein Klemmelement 33 mit einer Rastnase 36 zu sehen, das zu der nicht gezeigten und in Figur 3 weggelassenen zweiten Gehäusehälfte gehört. Mit dieser nicht gezeigten Gehäusehälfte ist auch ein Klemmbügel 34 im Längsschnitt unterhalb der hier gezeigten Gehäusehälfte 38 zu sehen, der über die hier gezeigte Gehäusehälfte 38 beim Zusammenklemmen der beiden Gehäusehälften des Gehäuses 9 wirksam wird. Die Schnapphaken 23 und 23' der konfektionierten Enden 5 und 7 der Lichtwellenleiter 2 und 3 sind in die in Figur 1 gezeigten Verriegelungsaussparungen 21 und 21' derart eingerastet, dass sich die Optiken 35 und 35' in der zentralen Kopplungsposition 40 lichtkoppelnd aber mechanisch nicht berührend gegenüberstehen.

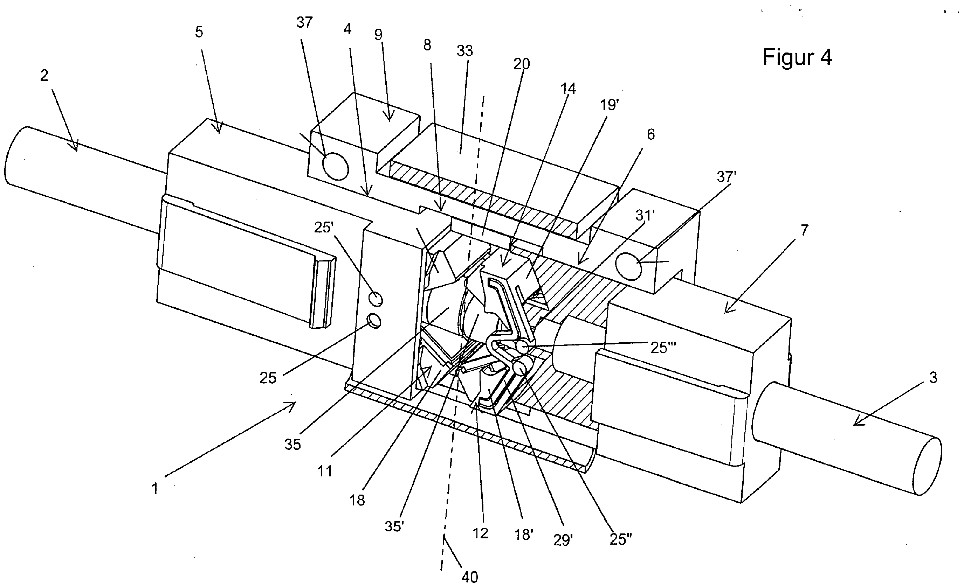

Figur 4 zeigt eine schematische perspektivische Ansicht des erfindungsgemäßen Kopplungsteils 1 mit eingeschobenen konfektionierten Enden 5 und 7 der Lichtwellenleiter 2 und 3 bei teilweise aufgeschnittenem Längsschnitt, so dass eine Spreizmechanik zum Öffnen der Schutzvorrichtungen 11 und 12 durch Auseinanderspreizen der Abdeckhälften 18 und 19 bzw. 18' und 19' sichtbar wird. Zum Vorspannen des geschlossenen Zustands der Abdeckhälften 18 und 19 der Schutzvorrichtung 11 und der Abdeckhälften 18' und 19' der Schutzvorrichtung 12 für die konfektionierten Enden 5 und 7 der Lichtwellenleiter 2 und 3 ist ein U-förmiges Federelement 29 bzw. 29' mit seinen Schenkeln in den Abdeckhälften 18' und 19' eingebettet.

In Figur 4 wird beispielsweise in dem aufgeschnittenen Bereich das eingebettete Federelement 29', das in den Abdeckhälften 18' und 19' des zweiten konfektionierten Endes 7 des zweiten Lichtwellenleiters 3 eingebettet ist, gezeigt. Die Basis des U-förmigen Federelements 29' ist derart gestaltet, dass die Übergänge von der Basis des Federelements 29' zu den eingebetteten Schenkeln jeweils im Bereich eines Schwenkgelenks mit 25" und 25"' für das zweite konfektionierte Ende 7 des zweiten Lichtwellenleiters 3 in Figur 4 zu sehen sind. Die entsprechenden Lagerungen der Schwenkgelenke 25 und 25' des ersten konfektionierten Endes 5 des ersten Lichtwellenleiters 2 sind ebenfalls in Figur 4 erkennbar. Durch die Aufspreizung der Abdeckhälften 18' und 19' gegen die Federkraft der U-förmigen Feder 29' ist die Basis des U-förmigen Federelements 29' entsprechend eingedellt.

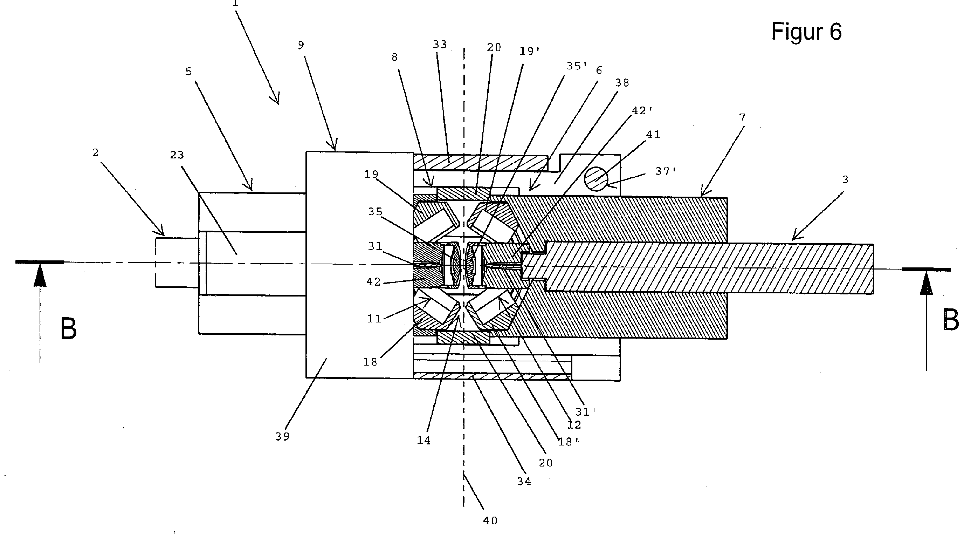

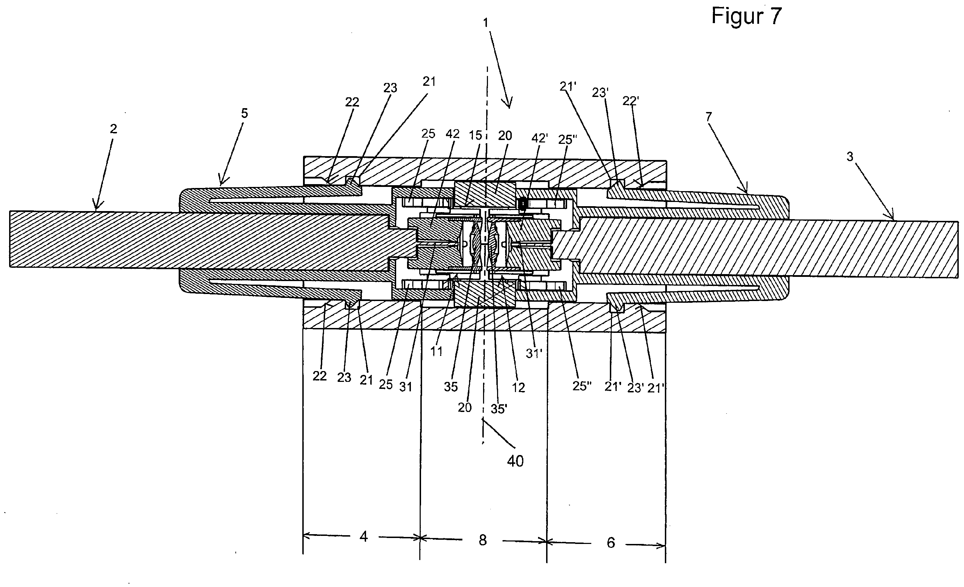

Das Spreizen der beiden Abdeckhälften 18' und 19' wird, wie bereits zu Figur 3 erwähnt, durch das Einführen der Führungsschiene 15 in die in Figur 3 gezeigten Profilnuten 26 und 27 bzw. 26' und 27' bewirkt, so dass innerhalb der Kopplungshülse 20 die Abdeckhälften 18, 19 bzw. 18', 19' der jeweiligen Schutzvorrichtungen 11 bzw. 12 in den offenen lichtkoppelnden Zustand 40 für die Optiken 35 und 35' gespreizt werden. Außerdem ist aus Figur 4 auch erkennbar, dass die Optiken 35 und 35' direkt mit den Lichtwellenleiterfasern 31 bzw. 31' in Verbindung stehen, von denen in Figur 4 die Lichtwellenleiterfaser 31' des zweiten Lichtwellenleiters 3 in einem minimalen Ausschnitt erkennbar ist. Dieses wird deutlicher in den nachfolgenden Längsschnittzeichnungen der Figuren 6 und 7.

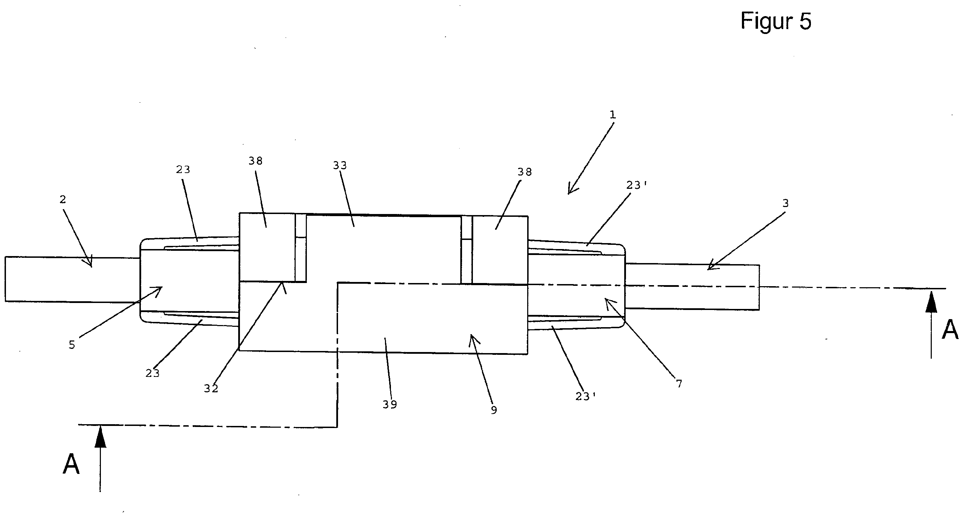

Figur 5 zeigt eine schematische Draufsicht auf das erfindungsgemäße Kopplungsteil 1 mit eingeschobenen konfektionierten Enden 5 und 7 der Lichtwellenleiter 2 und 3. Diese Draufsicht zeigt nun, dass beidseitig der Trennfuge 32 des Gehäuses 9 eine erste Gehäusehälfte 38 und gegenüberliegend eine zweite Gehäusehälfte 39 angeordnet sind, wobei die zweite Hälfte 39 auf die erste Hälfte 38 mithilfe des Klemmelements 33 und der in Figur 3 gezeigten Rastnase 36 und dem ebenfalls in Figur 3 gezeigten unteren Klemmbügel verriegelnd geklemmt ist.

Diese Konstruktion aus zwei Gehäusehälften ermöglicht es, die linear verschiebbare Kopplungshülse der Kopplungsvorrichtung 1 mit ihrem größeren Querschnitt gegenüber den Innenquerschnitten der Aufnahmebereiche in dem Gehäuse passgenau mithilfe der vorher erörterten Passstifte einzubringen. Außerdem zeigt Figur 5 nun deutlich die paarweise angeordneten Schnapphaken 23 für das konfektionierte Ende 5 des ersten Lichtwellenleiters 2 und die paarweise angeordneten Schnapphaken 23' des zweiten konfektionierten Endes 7 des zweiten Wellenleiters 3, so dass eine sichere Verankerung bzw. Verriegelung der konfektionierten Enden 5 und 7 in den vorhergehenden Figuren gezeigten Aufnahmebereichen 4 und 6 des Kopplungsteils 1 in Figur 5 erfolgt ist. Ferner zeigt Figur 5 eine abgeknickte Trennebene A-A durch das Kopplungsteil 1, die in der nachfolgenden Figur 6 dargestellt und weiter erörtert wird.

Figur 6 zeigt eine schematische perspektivische Ansicht des erfindungsgemäßen Kopplungsteils 1 mit eingeschobenen konfektionierten Enden 5 und 7 der Lichtwellenleiter 2 und 3 und den aufgeschnittenen Längsschnitt des konfektionierten Endes7 des Lichtwellenleiters 3 entlang der Schnittebene A-A der Figur 5. Im Schnittbild ist zumindest einer der Passstifte 41 im Querschnitt in der Passstiftbohrung 37' zu sehen. Auch das Klemmelement 33 und der dazugehörige Klemmbügel 34 zur Fixierung der zweiten Gehäusehälfte 39 auf der Gehäusehälfte 38 sind längsgeschnitten zu erkennen. In diesem lichtkoppelnden offenen Zustand 14 der jeweiligen Abdeckhälften 18 und 19 bzw. 18' und 19' der Schutzvorrichtungen 11 und 12 sind die Optiken 35 und 35' in der zentralen Kopplungsposition 40 innerhalb der Kopplungshülse 20 angeordnet.

Dabei werden die Optiken 35 und 35' der konfektionierten Enden 5 bzw. 7 der Lichtwellenleiter 2 bzw. 3 von Optikhaltern 42 und 42' gehalten, die gleichzeitig die Lichtwellenleiterfasern 31 und 31' koaxial umgeben, in Längsrichtung ausrichten und vor Beschädigungen schützen. Außerdem zeigt Figur 6 den Verlauf einer Schnittebene B-B, deren Längsschnitt in der nachfolgenden Figur 7 gezeigt und erörtert wird.

Figur 7 zeigt einen schematischen Längsschnitt durch das erfindungsgemäße Kopplungsteil 1 mit den paarweise eingerasteten Schnapphaken 23 bzw. 23' der eingeschobenen konfektionierten Enden 5 bzw. 7 der Lichtwellenleiter 2 bzw. 3 entlang der Schnittebene B-B der Figur 6. Mit dem paarweisen Einrasten der Schnapphaken 23 und 23' wird auch die linear verschiebbare Kopplungshülse 20 in der zentralen Kopplungsposition 40 des zentralen Kopplungsbereichs 8 exakt fixiert. Deutlich zu erkennen sind in den Aufnahmebereichen 4 und 6 sowohl die paarweise angeordneten Einführungsgleitflächen 22 bzw. 23' an den Innenseiten der Einführungsbereiche 4 und 6 als auch die paarweise angeordneten Verriegelungsaussparungen 21 bzw. 21' in den Seitenwänden der Aufnahmebereiche 4 und 6, mit denen die zentrale Kopplungsposition 40 im zentralen Kopplungsbereich 8 der Optiken 35 und 35' sichergestellt wird.

Der Längsschnitt durch die Kopplungshülse 20, innerhalb der die Optiken 35 und 35' ihren lichtkoppelnden offenen Zustand erreichen, ist durch die mittig angeordneten seitlichen Führungsschienen 15 verdickt. Diese Querschnittsverdickung durch die Führungsschienen 15 wirkt zusammen mit der ober erörterten Spreizmechanik, von der deutlich die paarweise angeordneten Schwenkgelenke 25 und 25" erkennbar sind. Ferner zeigt dieser Längsschnitt der Figur 7 erneut die Anordnung der Optikhalter 42 und 42' und die zentral in den Optikhaltern 42 bzw. 42' schützend geführten Lichtwellenleiterfasern 31 und 31'. Auch wird aus der Figur 7 deutlich erkennbar, dass die Optiken 35 und 35' von der Kopplungshülse 20 vollständig umgeben sind, die auch die Schutzvorrichtungen 11 und 12 in ihrem lichtkoppelnden offenen Zustand vollständig umgibt.

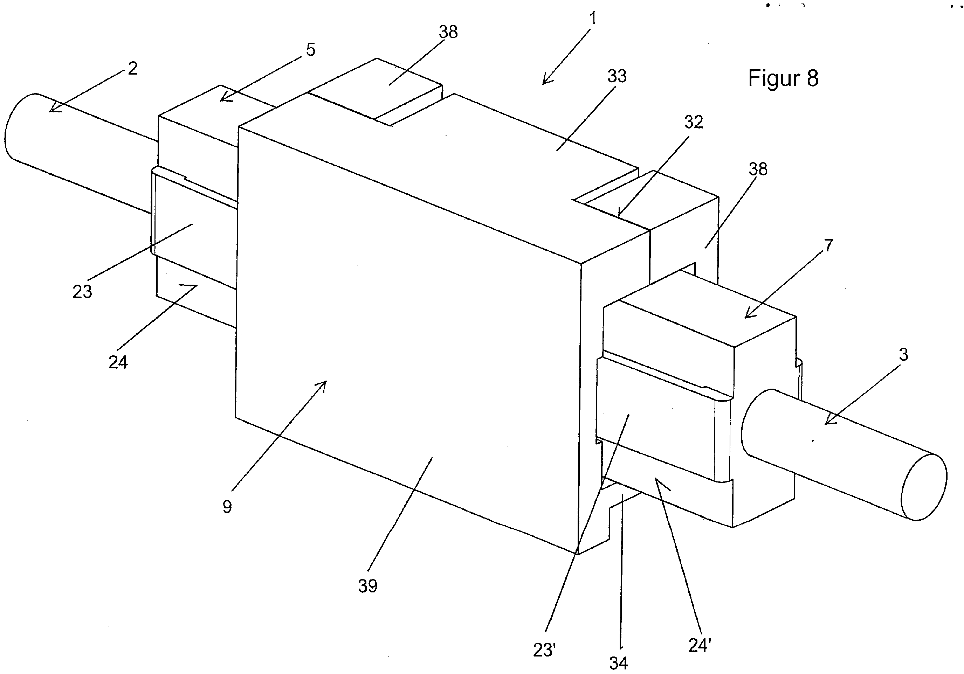

Figur 8 zeigt eine schematische perspektivische Ansicht des erfindungsgemäßen Kopplungsteils 1 mit eingeschobenen und verriegelten konfektionierten Enden 5 und 7 der Lichtwellenleiter 2 und 3. Aus dem Kopplungsteil 1 ragt lediglich ein Teil der Schnapphaken 23 und 23' heraus, der geeignet ist, die Schnapphaken 23 bzw. 23' in dem Gehäuse 9 zu entriegeln, um die konfektionierten Enden 5 und 7 der Lichtwellenleiter 2 und 3 aus dem Gehäuse 9 beim Demontieren herauszuziehen, wobei gleichzeitig innerhalb des Gehäuses die in Figur 4 gezeigte U-förmige Feder die dazugehörigen Abdeckhälften der Schutzvorrichtungen in den schützenden geschlossenen Zustand vor einem Herausziehen der konfektionierten Enden 5 und 7 beim Demontieren aus dem Gehäuse 9 bringt.

Obwohl lediglich eine beispielhafte Ausführungsform in der vorhergehenden Beschreibung gezeigt wurde, können verschiedenste Änderungen und Modifikationen daran vorgenommen werden. Die genannte Ausführungsform ist lediglich ein Beispiel und nicht dazu vorgesehen, den Gültigkeitsbereich, die Anwendbarkeit oder die Konfiguration des Kopplungsteils für Lichtwellenleiter in irgendeiner Weise zu beschränken.

### Bezugszeichenliste

- 1: Kopplungsteil
- 2: erster Lichtwellenleiter
- 3: zweiter Lichtwellenleiter
- 4: erster Aufnahmebereich
- 5: konfektioniertes erstes Ende
- 6: zweiter Aufnahmebereich
- 7: konfektioniertes zweites Ende
- 8: Kopplungsbereich
- 9: Gehäuse
- 10: Kopplungsvorrichtung
- 11: Schutzvorrichtung
- 12: Schutzvorrichtung
- 13, 13': schützender geschlossener Zustand
- 14, 14': lichtkoppelnder offener Zustand
- 15: Führungsschiene
- 17: innere Seitenwand
- 18: Abdeckhälfte
- 19: Abdeckhälfte
- 20: linear verschiebbare Kopplungshülse
- 21, 21': Verriegelungsaussparung
- 22, 22': Einführungsgleitfläche
- 23, 23': Schnapphaken
- 24, 24': Außenflächen
- 25, 25', 25", 25"': paarweise Schwenkgelenk
- 26, 26': Profilnut (untere)
- 27, 27': Profilnut (obere)
- 28, 28', 28", 28": Schwenkachse(n)
- 29: U-förmiges Federelement
- 30: eckige Frontseite
- 31, 31': Lichtwellenleiterfaser
- 32: Trennfuge
- 33: Klemmelement mit Rasthaken
- 34: Klemmbügel
- 35, 35': Optik
- 36: Rasthaken
- 37, 37': Passstiftbohrung
- 38: Gehäusehälfte
- 39: Gehäusehälfte
- 40: zentrale Kopplungsposition
- 41: Passstift
- 42, 42': Optikhalter

- L: Längserstreckung des Kopplungsteils
- lₕ: Längserstreckung der verschiebbaren Kopplungshülse
- lₖ: Längserstreckung des Kopplungsbereichs
- l₄: Längserstreckung des Aufnahmebereichs
- l₆: Längserstreckung des Aufnahmebereichs

## Patentansprüche

1. Kopplungsteil für Lichtwellenleiter (2,3) mit
einem Gehäuse (9), das
- einen ersten Aufnahmebereich (4) für ein konfektioniertes erstes Ende (5) eines ersten Lichtwellenleiters (2) aufweist, wobei das erste Ende (5) mit einer Schutzvorrichtung (11), die einen schützenden geschlossenen und einen lichtkoppelnden offenen Zustand (13 bzw. 14) aufweisen kann, versehen ist,
- einen zweiten Aufnahmebereich (6) für ein konfektioniertes zweites Ende (7) eines zweiten Lichtwellenleiters (3) aufweist, wobei das zweite Ende (7) mit einer zweiten Schutzvorrichtung (12), die einen schützenden geschlossenen und einen lichtkoppelnden offenen Zustand (13' bzw. 14') aufweisen kann, versehen ist, und
- einen zentralen Kopplungsbereich (8) zwischen den Aufnahmebereichen (4, 6) aufweist,
**dadurch gekennzeichnet, dass** der
zentrale Kopplungsbereich (8) eine Kopplungsvorrichtung (10) zum Koppeln der konfektionierten Enden (5, 7) aufweist,
wobei die Kopplungsvorrichtung (10) als eine in dem gesamten Kopplungsbereich (8) linear verschiebbare Kopplungshülse (20) zum Koppeln der konfektionierten Enden (5, 7) ausgebildet ist, die zum gleichzeitigen und gemeinsamen Öffnen der Schutzvorrichtungen (11, 12) geeignet ist,
wobei sich die Kopplungshülse (20) nach Einführen eines konfektionierten Endes (5, 7) eines Lichtwellenleiters (2, 3) in einen Aufnahmebereich (4, 6) des Gehäuses (9) in einem ersten, verschobenen Zustand befindet, bei dem die Schutzvorrichtung (11, 12) in einem schützenden geschlossenen Zustand (13) verbleibt, und
wobei sich die Kopplungshülse (20) nach Einführen des jeweils anderen konfektionierten Endes (7, 5) des anderen Lichtwellenleiters (3, 2) in den jeweils anderen Aufnahmebereich (6, 4) des Gehäuses (9) in einem zweiten, fixierten Zustand befindet, bei dem die Schutzvorrichtungen (11, 12) in einem lichtkoppelnden offenen Zustand sind.

2. Kopplungsteil nach Anspruch 1, wobei zu einem Verbringen der jeweiligen Schutzvorrichtung (11,12) innerhalb der Kopplungsvorrichtung (10) von einem schützenden geschlossenen Zustand (13) in einen lichtkoppelnden offenen Zustand (14) die Kopplungsvorrichtung (10) mechanische Mittel aufweist.

3. Kopplungsteil nach einem der vorhergehenden Ansprüche, wobei das Gehäuse (9) in Längsrichtung eine Trennfuge (32) zum Öffnen des Gehäuses (9) und zum Einbringen der linear verschiebbaren Kopplungshülse (20) in einen zur Aufnahme der linear verschiebbaren Kopplungshülse (20) im Querschnitt gegenüber den Aufnahmebereichen (4, 6) vergrößerten zentralen Kopplungsbereich (8) aufweist

4. Kopplungsteil nach einem der vorhergehenden Ansprüche, wobei das Gehäuse (9), die Aufnahmebereiche (4, 6), die konfektionierten Enden (5, 7) der Lichtwellenleiter (2, 3) und die linear verschiebbare Kopplungshülse (20) äußere eckige Umrisse aufweisen.

5. Kopplungsteil nach einem der vorhergehenden Ansprüche, wobei die Kopplungshülse (20) mit ihrem äußeren Querschnitt einem eckigen Innenquerschnitt des zentralen Kopplungsbereichs (8) innerhalb des Gehäuses (9) angepasst ist, und die Kopplungshülse (20) eine Längserstreckung lₕ, die geringer als die Längserstreckung lₖ des zentralen Kopplungsbereichs (8) innerhalb des Gehäuses (9) ist und vorzugsweise die Hälfte lₖ/2 der Längserstreckung lₖ des zentralen Kopplungsbereichs (8), aufweist.

6. Kopplungsteil nach einem der vorhergehenden Ansprüche, wobei ein Drittel einer Gehäuselänge L des Gehäuses (9) jeweils für den ersten und für den zweiten Aufnahmebereich (4, 6) zur Aufnahme der ersten bzw. zweiten konfektionierten Enden (5, 7) des ersten und des zweiten Lichtwellenleiters (2, 3) vorgesehen ist, und das restliche Drittel der Gehäuselänge L die Längserstreckung lₖ des zentralen Kopplungsbereich (8) ist.

7. Kopplungsteil nach einem der vorhergehenden Ansprüche, wobei der Innenquerschnitt der linear verschiebbaren Kopplungshülse (20) dem jeweiligen Außenquerschnitt der Schutzvorrichtungen (11, 12) der konfektionierten Enden (5, 7) in ihrem lichtkoppelnden offenen Zustand (14) angepasst ist.

8. Kopplungsteil nach einem der vorhergehenden Ansprüche, wobei die linear verschiebbare Kopplungshülse (20) zwei einander gegenüberliegende innere Seitenwände (17) aufweist, die mittlere vorspringende Führungsschienen (15) aufweisen, die sich in Richtung der linearen Verschiebbarkeit der Kopplungshülse (20) erstrecken.

9. Kopplungsteil nach Anspruch 8, wobei die vorspringenden Führungsschienen (15) auf den inneren Seitenwänden (17) der linear verschiebbaren Kopplungshülse (20) derart vorgesehen sind, dass sie mit entsprechenden Profilnuten (26, 27) der jeweiligen Abdeckungshälften (18, 19) der konfektionierten Enden (5, 7) gleitverschiebbar in Eingriff sind.

10. Kopplungsteil nach Anspruch 9, wobei das Profil der Profilnuten (26, 27) derart ausgebildet ist, dass sie beim Verschieben der Führungsschienen (15) eine Kulisse bilden, die ein Spreizen der beiden Abdeckhälften (18, 19) in den offenen lichtkoppelnden Zustand (14) der Schutzvorrichtungen (11, 12) unterstützen.

11. Kopplungsteil nach einem der vorhergehenden Ansprüche, wobei das Gehäuse (9) in den Aufnahmebereichen (4, 6) Einführungsgleitflächen (22) und Verriegelungsaussparungen (21) aufweist, die derart gestaltet sind, dass Schnapphaken (23), die an Außenflächen (24) der konfektionierten Enden (5, 7) angeordnet sind, in den Einführungsgleitflächen (22) vorgespannt und in die Verriegelungsaussparungen (21) zum Verriegeln der konfektionierten Enden (5, 7) in dem Kopplungsbereich (8) des Gehäuses (9) bei lichtkoppelndem offenen Zustand (14) der Schutzvorrichtungen (11,12) einrastbar sind.

12. Konfektioniertes Ende von jeweils zu koppelnden Enden von Lichtwellenleitern (2, 3) in einem Kopplungsteil (1) gemäß einem der Ansprüche 1 bis 11, wobei das konfektionierte Ende (5, 7) jeweils eine Schutzvorrichtung (11, 12) aufweist, die zwei spreizbare Abdeckhälften (18, 19) aufweist, die derart gestaltet sind, dass die Abdeckhälften (18, 19) in einem geschlossenen Zustand (13) unter einer Vorspannung aufeinander liegen und die Enden des Lichtwellenleiters schützen, und dass die Abdeckhälften (18, 19) auseinander gespreizt ausgestaltet sind und einen lichtkoppelnden offenen Zustand (14) aufweisen, wenn sie gemeinsam mit einem zweiten, im gegenüberliegenden Aufnahmebereich (6) angeordneten konfektionierten Ende (7) in einem Kopplungsbereich (8) des Kopplungsteils (1) innerhalb einer Kopplungshülse (20) angeordnet sind.

13. Konfektioniertes Ende nach Anspruch 12, wobei die Abdeckhälften (18, 19) mindestens eine Schwenkachse (28) aufweisen, um welche die Abdeckhälften (18, 19) von einer vorgespannten geschlossenen Position in eine gespreizte offene Position spreizbar sind.

14. Konfektioniertes Ende nach Anspruch 13, wobei das konfektionierte Ende (5, 7) U-förmige Federelemente (29) aufweist, deren Schenkel in den Abdeckhälften (18, 19) eingebettet sind und deren Basen im Bereich der mindestens einen Schwenkachse (28) angeordnet sind.

15. Konfektioniertes Ende nach einem der Ansprüche 12 bis 14, wobei das konfektionierte Ende (5, 7) eine Optik (35) aufweist, die von den Abdeckhälften (18, 19) in dem geschlossenen Zustand (13) schützend umschlossen ist.

16. Konfektioniertes Ende nach einem der Ansprüche 12 bis 15, wobei die Abdeckhälften (18, 19) über eine eckige Frontseite (30) in Längsrichtung herausragen, wobei die Frontseite (30) eine Frontfläche aufweist, die dem Innenquerschnitt der Aufnahmebereiche (4, 6) des Kopplungsteils (1) angepasst und in der Lage ist, im Kontakt mit der linear verschiebbaren eckigen Kopplungshülse (20), diese aufgrund angepasster Abmessungen in dem zentralen Kopplungsbereich (8) des Kopplungsteils (1), linear zu verschieben.

17. Kopplungsverfahren zum optischen Koppeln von zwei konfektionierten Enden (5, 7) von Lichtwellenleitern (2, 3) in einem Kopplungsteil (1), wobei das Kopplungsteil (1) ein Gehäuse (9), Aufnahmebereiche (4, 6) für die konfektionierten Enden (5, 7) und einen zentralen Kopplungsbereich (8) aufweist, in dem eine linear verschiebbare Kopplungshülse (20) als eine Kopplungsvorrichtung (10) ausgebildet ist, wobei das Kopplungsverfahren folgende Verfahrensschritte aufweist:
- Einführen eines ersten konfektionierten Endes (5) eines ersten Lichtwellenleiters (2) in einen ersten Aufnahmebereich (4) des Kopplungsteils (1), der einem zweiten Aufnahmebereich (6) gegenüberliegend angeordnet ist, mit einer ersten geschlossenen Schutzvorrichtung (11) des ersten konfektionierten Endes (5) in den zentralen Kopplungsbereich (8), bis eine zentrale Position (40) in dem Kopplungsbereich (8) erreicht ist, wobei während des Einführens des ersten konfektionierten Endes (5) die Kopplungshülse (20) linear verschoben wird;
- Einführen eines zweiten konfektionierten Endes (7) eines zweiten Lichtwellenleiters (3) in einen zweiten Aufnahmebereich (6) des Kopplungsteils (1) mit einer zweiten geschlossenen Schutzvorrichtung (12), wobei die linear verschiebbare Kopplungshülse (20) durch das eingeführte zweite konfektionierte Ende (7) in eine zentrale Kopplungsposition (40) linear verschoben wird und die Schutzvorrichtungen (11,12) beider konfektionierten Enden (5, 7) von dem geschlossenen Zustand (13) in einen lichtkoppelnden offenen Zustand (14) verbracht werden.

18. Kopplungsverfahren nach Anspruch 17, das ferner umfasst:
- lineares Verschieben der Kopplungshülse (20), die als Kopplungsvorrichtung (10) dient, während des Einführens des ersten konfektionierten Endes (5) des ersten Lichtwellenleiters (2) in den ersten Aufnahmebereich (4) des Kopplungsteils (1) bis Schnapphaken (23) auf Außenflächen (24) des konfektionierten Endes (5) in Verriegelungsaussparungen (21) in Gehäuseinnenwänden arretierend einrasten,
- Einführen des zweiten konfektionierten Endes (7) des zweiten Lichtwellenleiters (3) in den zweiten Aufnahmebereich (6) des Kopplungsteils (1), der dem ersten Aufnahmebereich (4) gegenüberliegend angeordnet ist, bis Schnapphaken (23) auf Außenflächen (24) des konfektionierten zweiten Endes (7) in Arretierungsaussparungen (21) in Gehäuseinnenwänden des zweiten Aufnahmebereichs (6) arretierend einrasten;
wobei die linear verschiebbare Kopplungshülse (20) in dem zentralen Kopplungsbereich (8) durch das eingeführte zweite konfektionierte Ende (7) in eine zentrale Kopplungsposition (40) linear verschoben wird und die jeweiligen Abdeckhälften (18, 19) beider Schutzvorrichtungen (11,12) der konfektionierten Enden (5, 7) von dem geschlossenen Zustand (13) in einen lichtkoppelnden offenen Zustand (14) verbracht werden, wobei Führungsschienen (15) der inneren Seitenwände (17) der Kopplungshülse (20) in Profilnuten (26, 27) der Abdeckhälften (18, 19) eingreifen und die Abdeckhälften (18,19) beider Schutzvorrichtungen (11,12) auseinander spreizen.
